# EUROPÄISCHE PATENTSCHRIFT

(11) **EP 4 194 274 B1**
(45) Veröffentlichungstag und Bekanntmachung des Hinweises auf die Patenterteilung: **23.10.2024**
(21) Anmeldenummer: 22212499.2
(22) Anmeldetag: 09.12.2022
(51) Int. Cl.: B60R 11/04

(54) **VORRICHTUNG FÜR EIN FAHRZEUG UND FAHRZEUG**
DEVICE FOR A VEHICLE AND VEHICLE
DISPOSITIF POUR VÉHICULE ET VÉHICULE

(30) Priorität: 10.12.2021 DE 102021214167
(43) Veröffentlichungstag der Anmeldung: 14.06.2023
(73) Patentinhaber: Witte Automotive GmbH, 42551 Velbert (DE)
(72) Erfinder: SCHÖLER, Manuel, 45289 Essen (DE)
(74) Vertreter: Liedtke & Partner Patentanwälte

(56) Entgegenhaltungen:
- DE-A1- 102010 060 573
- DE-A1- 102013 018 022
- DE-A1- 102015 101 007
- DE-A1- 102015 102 726
- DE-A1- 102016 113 410

## Beschreibung

Die Erfindung betrifft eine Vorrichtung für ein Fahrzeug, insbesondere ein Kraftfahrzeug, mit einer bewegbaren Sensoreinheit und einem bewegbaren Schutzelement zur Abdeckung der Sensoreinheit. Des Weiteren betrifft die Erfindung ein Fahrzeug mit solch einer Vorrichtung.

Aus dem Stand der Technik, zum Beispiel der DE 10 2019 101 861 A1 oder der DE 10 2015 102 726 A1, sind Vorrichtungen der eingangs genannten Art, insbesondere eine Emblemanordnung im Bereich einer Fahrzeughaube, bekannt, bei welchen die Sensoreinheit, zum Beispiel einer Kamera, über Kulissenführungen oder Gleitbahnen ausfahren. Derartige Vorrichtungen benötigen viel Bauraum, insbesondere eine große Bautiefe, und führen zu Geräuschen.

Aufgabe der vorliegenden Erfindung ist es, eine verbesserte Vorrichtung anzugeben, welche einfach und kompakt und hinreichend geschützt aufgebaut und möglichst geräuscharm ist. Des Weiteren ist ein Fahrzeug mit einer solchen verbesserten Vorrichtung anzugeben.

Hinsichtlich der Vorrichtung wird die Aufgabe erfindungsgemäß durch die Merkmale des Patentanspruchs 1 oder des Patentanspruchs 2 gelöst. Hinsichtlich des Fahrzeugs wird die Aufgabe erfindungsgemäß durch die Merkmale des Patentanspruchs 15 gelöst.

Vorteilhafte Weiterbildungen sind Gegenstand der abhängigen Patentansprüche.

Die mit der Erfindung erzielten Vorteile bestehen insbesondere darin, dass eine Ausfahrbewegung der Sensoreinheit über einen Hebelmechanismus mit ausschließlich rotatorischen Lagerstellen besonders geräuscharm erfolgt. Darüber hinaus ist durch eine koaxiale Anordnung von Schutzelement, Zierelement und optional Hebelmechanismus eine besonders kompakte Bauform der Vorrichtung gegeben.

Unter einer koaxialen Anordnung des Schutzelements und des Zierelements oder aller drei Komponenten - des Schutzelements, des Zierelements und des Hebelmechanismus - wird insbesondere verstanden, dass diese eine übereinstimmende Schwenkachse aufweisen und somit um dieselbe Schwenkachse (auch Drehachse oder Rotationsachse genannt) rotieren. Durch die Abdeckung der Sensoreinheit in der Ruheposition sowohl mittels des Schutzelements als auch mittels des Zierelements ist die Sensoreinheit sicher und geschützt gelagert.

Beispielsweise weist der Träger an einer Rückseite eine erste feststehende Schwenkachse, die einen ersten feststehenden Drehpunkt für den Hebelmechanismus bildet, und an einer Vorderseite eine zweite feststehende Schwenkachse auf, die einen zweiten feststehenden Drehpunkt sowohl für den Hebelmechanismus als auch für das Schutzelement und das Zierelement bildet.

In einer möglichen Ausführungsform sind das Schutzelement und das Zierelement über den zweiten feststehenden Drehpunkt an dem Träger angelenkt und synchron zwischen der Schließstellung und der Offenstellung bewegbar. In der jeweiligen Schließstellung des Schutzelements und des Zierelements sind diese beispielsweise parallel zueinander angeordnet. Insbesondere sind diese benachbart zueinander angeordnet. Dabei können das Schutzelement und das Zierelement in einem Abstand, insbesondere einen geringen Abstand, zum Beispiel im Millimeterbereich, zueinander angeordnet sein. Dies ermöglicht einen einfachen und kompakten Aufbau des Verstellmechanismus, insbesondere des Hebelmechanismus, und somit der Vorrichtung.

Insbesondere ist die Sensoreinheit mittels des Hebelmechanismus relativ zum Träger zwischen der Ruheposition und der Betriebsposition bewegbar. Beispielsweise ist die Sensoreinheit mittels des Hebelmechanismus über eine kombinierte translatorische und rotatorische Bewegung zwischen der Ruheposition und der Betriebsposition verstellbar. Das Schutzelement und das Zierelement sind mittels des Hebelmechanismus verschwenkbar relativ zum Träger zwischen der Schließstellung und der Offenstellung bewegbar.

In einer möglichen Ausführungsform umfasst der Hebelmechanismus zumindest zwei Hebel, die jeweils an dem feststehenden Träger um eine feststehende Schwenkachse schwenkbar und an dem Sensorelement um eine bewegbare Schwenkachse angelenkt sind. Mit anderen Worten: Der Hebelmechanismus umfasst zwei feststehende, rotatorische Lagerstellen, insbesondere feststehende rotatorische Gelenke, an dem Träger und zwei bewegbare, insbesondere "mitfahrende", rotatorische Lagerstellen, insbesondere bewegbare rotatorische Gelenke, an dem Sensorelement.

Bevorzugt umfasst der Hebelmechanismus einen ersten Hebel und einen zweiten Hebel. Beispielsweise ist der erste Hebel auf einer ersten Trägerseite angelenkt. Der zweite Hebel ist auf einer zweiten Trägerseite angelenkt. Die zweite Trägerseite ist gegenüberliegend zur ersten Trägerseite am Träger ausgebildet. Beispielsweise bilden die erste Trägerseite eine Innenseite und die zweite Trägerseite eine Außenseite des Trägers.

Des Weiteren ist der erste Hebel auf der ersten Trägerseite um die erste feststehende Schwenkachse schwenkbar und als ein erster Schwenkhebel zum Ausfahren und Einfahren der Sensoreinheit relativ zum Träger ausgebildet. Dabei kann der erste Schwenkhebel einerseits an dem feststehenden Träger um die erste feststehende Schwenkachse schwenkbar und andererseits an dem Sensorelement um eine erste bewegbare Schwenkachse angelenkt sein.

Der zweite Hebel ist auf der zweiten Trägerseite um die zweite feststehende Schwenkachse schwenkbar, die insbesondere gleichzeitig den Drehpunkt des Schutzelements und des Zierelements bildet. Der zweite Hebel bildet insbesondere einen zweiten Schwenkhebel sowohl zum Einfahren als auch Ausfahren der Sensoreinheit und insbesondere gleichzeitig sowohl zum Einklappen als auch Ausklappen sowohl für das Schutzelement als auch das Zierelement. Dabei kann der zweite Schwenkhebel einerseits an dem feststehenden Träger um die zweite feststehende Schwenkachse schwenkbar und andererseits an dem Sensorelement um eine zweite bewegbare Schwenkachse angelenkt sein.

Die erste bewegbare Schwenkachse und die zweite bewegbare Schwenkachse bilden gleichzeitig auch das Sensorelement lagernde Lagerachsen. Dadurch ist eine platzsparende und kompakte Vorrichtung ermöglicht.

Der feststehende Träger weist eine Trägeröffnung auf, durch welche die Sensoreinheit zwischen ihrer Ruheposition und ihrer Betriebsposition bewegbar ist.

Darüber hinaus sind das Schutzelement und das Zierelement in der Schließstellung zueinander beabstandet. Insbesondere ist zwischen dem Schutzelement und dem Zierelement ein Dämpfungselement, zum Beispiel ein Gummiring oder ein Gummipuffer, angeordnet. Das Dämpfungselement kann gleichzeitig ein Dichtungselement bilden. Dies ermöglicht eine besonders geräuscharme Vorrichtung, welche gleichzeitig vor einer Verschmutzung geschützt ist. Insbesondere werden das Schutzelement und das Zierelement in der Schließstellung mittels des Hebelmechanismus gegen das Dämpfungselement und/oder das Dichtungselement gezogen. Das Dichtungselement umgibt vorteilhafterweise die Trägeröffnung vollständig. Ebenso kann das Dämpfungselement die Trägeröffnung vollständig umgeben oder alternativ bereichsweise ausgebildet sein.

Ferner kann der Hebelmechanismus mit einer von einem Elektromotor drehend antreibbaren Welle gekoppelt sein, mit der einer der Hebel drehfest verbunden ist. Hierdurch ist die Vorrichtung motorisch verstellbar ausgebildet.

Das Schutzelement ist beispielsweise als ein Abdeckelement für die Sensoreinheit, insbesondere ein inneres Abdeckelement, ausgebildet. Das Zierelement ist beispielsweise als ein Emblem, zum Beispiel ein Herstelleremblem, ein Zeichen, ein Symbol oder ein Markenemblem, insbesondere ein äußeres Emblem, ausgebildet. Darüber kann das Emblem ein oder mehrere Leuchtmittel zum Beleuchten des Emblems aufweisen.

Die Sensoreinheit ist beispielsweise ein Umfeldsensor, insbesondere ein Ultraschallsensor, Lasersensor, Radarsensor, Lidarsensor oder ein Kamerasensor.

Ein Fahrzeug, insbesondere ein Kraftfahrzeug, umfasst die zuvor beschriebene Vorrichtung. Beispielsweise ist die Vorrichtung vorne an einer Motorhaube oder Fronthaube oder hinten an einem Heckdeckel oder Kofferraumdeckel angeordnet, wobei die Sensoreinheit, insbesondere eine Umgebungserfassungseinheit, wie eine Kamera, in der eingefahrenen Ruheposition von dem Schutzelement und dem Zierelement in ihren Schließstellungen abgedeckt und von außen unzugänglich hinter dem Schutzelement und dem Zierelement angeordnet ist. In der ausgefahrenen Betriebsposition der Sensoreinheit ist diese durch die Trägeröffnung hindurch ausgefahren und von außen zugänglich und kann somit die Fahrzeugumgebung erfassen.

Die Vorrichtung ist insbesondere als eine vormontierte Montageeinheit ausgebildet. Die Vorrichtung weist aufgrund ihres Aufbaus geringe Bauraumanforderungen auf. Somit ist eine Verwendung der Vorrichtung in und/oder an einem Fahrzeug ohne konstruktive Änderung zumindest von einzelnen Fahrzeugteilen realisierbar. Insbesondere ist die Vorrichtung an verschiedene Fahrzeuggeometrien anpassbar, so dass die Vorrichtung in verschiedene Fahrzeugbaureihen einsetzbar ist.

Ausführungsbeispiele der Erfindung werden anhand von Zeichnungen näher erläutert. Dabei zeigen:
- Figur 1: schematisch ein Fahrzeug mit einer erfindungsgemäßen Vorrichtung,
- Figuren 2 bis 5: schematisch verschiedene Ansichten einer Ausführungsform einer erfindungsgemäßen Vorrichtung in geschlossener Position,
- Figur 6: schematisch in Seitenansicht eine erste Trägerseite der erfindungsgemäßen Vorrichtung in teilgeöffneter Position,
- Figur 7: schematisch in perspektivischer Darstellung die Vorrichtung gemäß Figur 3 in der teilgeöffneten Position,
- Figur 8: schematisch in perspektivischer Darstellung eine erste Trägerseite der erfindungsgemäßen Vorrichtung in vollständig geöffneter Position, und
- Figur 9: schematisch in Seitenansicht die Vorrichtung gemäß Figur 5 in der vollständig geöffneten Position.

Einander entsprechende Teile sind in allen Figuren mit den gleichen Bezugszeichen versehen.

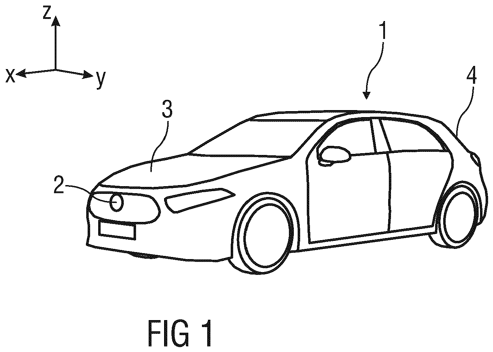

**Figur** 1 zeigt schematisch ein Fahrzeug 1 mit einer erfindungsgemäßen Vorrichtung 2. Beispielsweise ist die Vorrichtung 2 vorne an einer Motorhaube 3 und/oder hinten an einem Heckdeckel 4 angeordnet. Die Vorrichtung 2 weist eine geschlossene Position auf und eine vollständig geöffnete Position, in welcher eine Umgebung des Fahrzeugs 1 erfasst werden kann. **Figur 1** zeigt die Vorrichtung 2 in geschlossener Position. Die Vorrichtung 2 ist als eine vormontierte Montageeinheit ausgebildet, die im vormontierten Zustand an dem Fahrzeug 1 angeordnet und befestigt werden kann.

Das in der **Figur 1** schematisch dargestellte Fahrzeug 1 wird nachfolgend unter Verwendung von drei senkrecht zueinander verlaufenden Raumrichtungen beschrieben. Eine Längsrichtung X verläuft weitgehend horizontal und vorzugsweise parallel zu einer Fahrzeuglängsrichtung, die der gewöhnlichen Fahrtrichtung des Fahrzeugs 1 entspricht. Eine zu der Längsrichtung X senkrecht verlaufende Querrichtung Y ist im Fahrzeug 1 ebenfalls horizontal ausgerichtet und verläuft parallel zu einer Fahrzeugquerrichtung. Eine Vertikalrichtung Z verläuft senkrecht zu der Längsrichtung X und senkrecht zu der Querrichtung Y. Beim Fahrzeug 1 verläuft die Vertikalrichtung Z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeug 1 sitzenden Insassen in normaler Sitzposition und in Fahrtrichtung schauend.

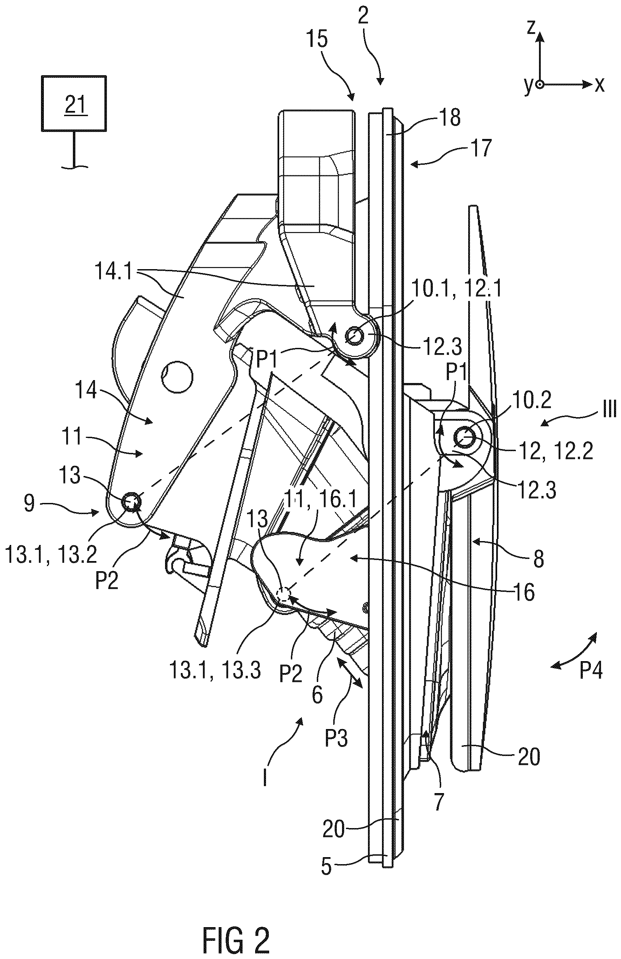

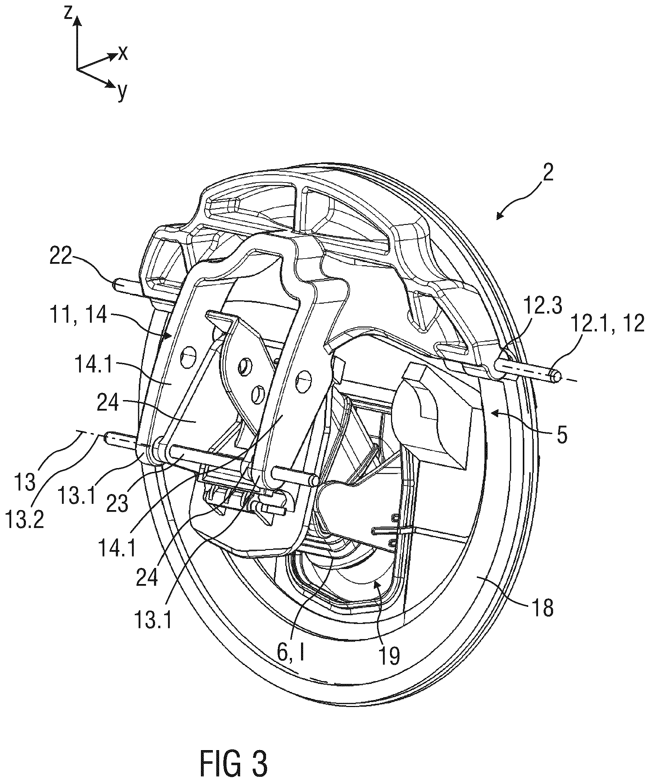

**Figur 2** zeigt schematisch in Seitenansicht eine Ausführungsform der erfindungsgemäßen Vorrichtung 2 in geschlossener Position. **Figuren 3 bis 5** zeigen schematisch in verschiedenen perspektivischen Ansichten die Vorrichtung 2 in geschlossener Position.

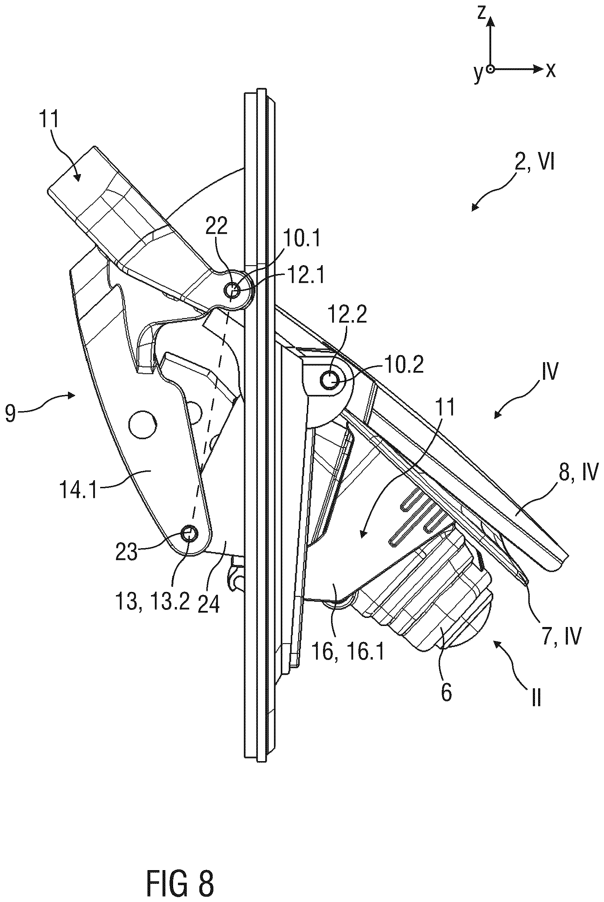

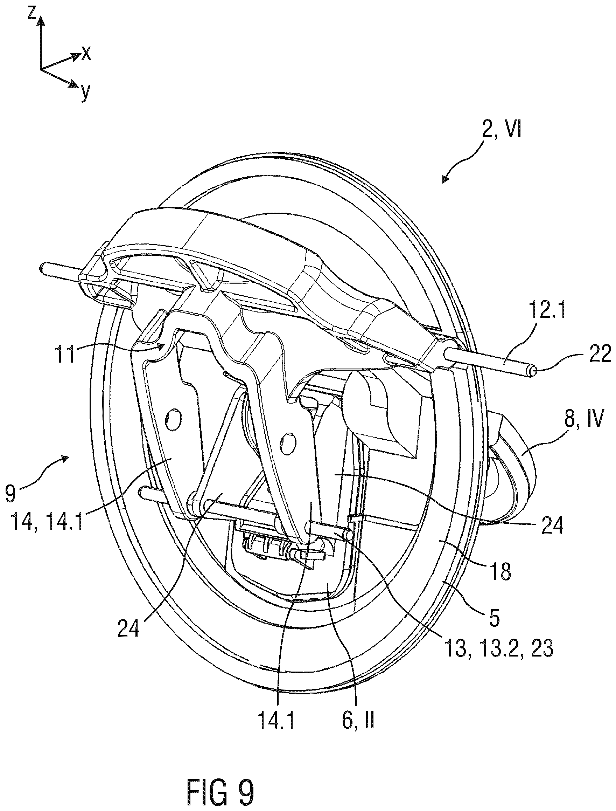

Die Vorrichtung 2 umfasst zumindest einen feststehenden Träger 5, eine bewegbare Sensoreinheit 6, die zwischen einer Ruheposition I (dargestellt in **Figuren 2 bis 5****)** und einer Betriebsposition II (dargestellt in **Figuren 8** **und** **9**) bewegbar ist, ein bewegbares Schutzelement 7 für die Sensoreinheit 6 und ein bewegbares Zierelement 8.

Das Schutzelement 7 ist beispielsweise als ein Abdeckelement, insbesondere ein innerer Sensordeckel oder eine innere Sensorklappe, ausgebildet. Das Zierelement 8 ist beispielsweise ein Emblem, insbesondere ein äußeres Emblem, ein Markenemblem. Darüber kann das Emblem ein oder mehrere, nicht dargestellte Leuchtmittel zum Beleuchten des Emblems aufweisen. Das Zierelement 8 kann auch als Betätigungselement für ein Schloss oder eine Verriegelung ausgebildet sein und mit einem nicht näher dargestellten Schloss oder einer nicht näher dargestellten Verriegelung gekoppelt sein.

Das Schutzelement 7 und das Zierelement 8 sind jeweils zwischen einer Schließstellung III, wie in **Figuren 2 bis 5** gezeigt, und einer Offenstellung IV, wie in **Figuren 8** **und** **9** gezeigt, bewegbar.

In der jeweiligen Schließstellung III von dem Schutzelement 7 und dem Zierelement 8 sind diese beispielsweise annähernd parallel zueinander angeordnet. Insbesondere sind diese benachbart zueinander angeordnet. Dabei können das Schutzelement 7 und das Zierelement 8 in einem Abstand, insbesondere einen geringen Abstand, zum Beispiel im Millimeterbereich, zueinander angeordnet sein. Darüber hinaus decken das Schutzelement 7 und das Zierelement 8 in ihrer Schließstellung III die Sensoreinheit 6 in ihrer Ruheposition I ab.

In der Offenstellung IV von Schutzelement 7 und Zierelement 8 ist die Sensoreinheit 6 in ihre Betriebsposition II gestellt, wie in **Figuren 8** **und** **9** gezeigt.

Die Sensoreinheit 6, das Schutzelement 7 und das Zierelement 8 sind mittels eines Hebelmechanismus 9 miteinander bewegungsgekoppelt. Das Schutzelement 7 und das Zierelement 8 sind rotatorisch und koaxial zueinander an dem Träger 5 gelagert. Die Sensoreinheit 6 ist an dem Hebelmechanismus 9 angelenkt. Der Hebelmechanismus 9 ist wiederum an dem Träger 5 angelenkt.

Beispielsweise weist der Träger 5 an einer Rückseite 15 (auch Innenseite oder erste Trägerseite genannt) eine erste feststehende Schwenkachse 12.1, die einen ersten feststehenden Drehpunkt 10.1 für den Hebelmechanismus 9 bildet, und an einer Vorderseite 17 (auch Außenseite oder zweite Trägerseite genannt) eine zweite feststehende Schwenkachse 12.2 auf, die einen zweiten feststehenden Drehpunkt 10.2 sowohl für den Hebelmechanismus 9 als auch für das Schutzelement 7 und das Zierelement 8 bildet. Die feststehenden Drehpunkte 10.1 und 10.2 sind als feststehende Schwenkachsen 12 ausgebildet.

Die Sensoreinheit 6 ist insbesondere eine Umgebungserfassungseinheit, wie zum Beispiel eine Kamera, ein Radarsensor, eine Ultraschalleinheit.

In der eingefahrenen Ruheposition I der Sensoreinheit 6 ist diese von dem Schutzelement 7 und dem Zierelement 8 in ihren Schließstellungen III vollständig abgedeckt. Insbesondere ist die Sensoreinheit 6 von außen unzugänglich hinter dem Schutzelement 7 und dem Zierelement 8 angeordnet.

Das Schutzelement 7 und das Zierelement 8 sind erfindungsgemäss über den gemeinsamen zweiten feststehenden Drehpunkt 10.2 an dem Träger 5 angelenkt und schwenkbar gelagert.

Dabei sind das Schutzelement 7 und das Zierelement 8 synchron zwischen ihrer Schließstellung III und der Offenstellung IV bewegbar, insbesondere schwenkbar. Dies ermöglicht einen einfachen und kompakten Aufbau des Verstellmechanismus, insbesondere des Hebelmechanismus 9, und somit der Vorrichtung 2.

Insbesondere ist die Sensoreinheit 6 mittels des Hebelmechanismus 9 relativ zum Träger 5 zwischen der Ruheposition I und der Betriebsposition II bewegbar. Beispielsweise ist die Sensoreinheit 6 mittels des Hebelmechanismus 9 über eine kombinierte translatorische und rotatorische Bewegung zwischen der Ruheposition I und der Betriebsposition II verstellbar.

Das Schutzelement 7 und das Zierelement 8 sind mittels des Hebelmechanismus 9 verschwenkbar relativ zu dem Träger 5 zwischen der Schließstellung III und der Offenstellung IV bewegbar.

Der Hebelmechanismus 9 umfasst zumindest zwei Hebel 11, die jeweils mit einem Hebelende an dem feststehenden Träger 5 um die feststehenden Schwenkachsen 12 schwenkbar sind. Mit den gegenüberliegenden Hebelenden sind die zwei Hebel 11 an dem Sensorelement 6 jeweils an bewegbaren Schwenkachsen 13 angelenkt.

Mit anderen Worten: Der Hebelmechanismus 9 umfasst als feststehende Schwenkachsen 12 zwei feststehende Lagerstellen 12.3, insbesondere feststehende rotatorische Gelenke, an dem Träger 5. Die zwei feststehenden Lagerstellen 12.3 bilden den ersten feststehenden Drehpunkt 10.1 und den zweiten feststehenden Drehpunkt 10.2 der Hebel 11.

Darüber hinaus umfasst der Hebelmechanismus 9 als bewegbare Schwenkachsen 13 eine erste bewegbare Schwenkachse 13.2 und eine zweite bewegbare Schwenkachse 13.3. Die erste bewegbare Schwenkachse 13.2 und die zweite bewegbare Schwenkachse 13.3 sind als zwei bewegbare, insbesondere "mitfahrende", Lagerstellen 13.1, insbesondere bewegbare Gelenke, an dem Sensorelement 6 ausgebildet. Dabei führt die Schwenkbewegung der Hebel 11 um die feststehenden

Schwenkachsen 12 gemäß Pfeil P1 zu einer entsprechenden Schwenkbewegung der bewegbaren Schwenkachsen 13 gemäß Pfeil P2, welche eine Ausfahrbewegung oder Einfahrbewegung des Sensorelements 6 gemäß Pfeil P3 bewirkt. Mit anderen Worten: Die erste bewegbare Schwenkachse 13.2 und die zweite bewegbare Schwenkachse 13.3 bilden gleichzeitig auch das Sensorelement 6 lagernde Lagerachsen.

Beispielsweise umfasst der Hebelmechanismus 9 als Hebel 11 einen ersten Hebel 14 (auch Hebelarm genannt), der einerseits auf der ersten Trägerseite 15 ortsfest angelenkt ist und andererseits an der Sensoreinheit 6 ortsbeweglich angelenkt ist.

Darüber hinaus umfasst der Hebelmechanismus 9 als weiteren Hebel 11 einen zweiten Hebel 16, der einerseits auf der zweiten Trägerseite 17 ortsfest angelenkt ist und andererseits an der Sensoreinheit 6 ortsbeweglich angelenkt ist. Die zweite Trägerseite 17 ist gegenüberliegend zur ersten Trägerseite 15 am Träger 5 ausgebildet. Beispielsweise bilden die erste Trägerseite 15 eine Innenseite und die zweite Trägerseite 17 eine Außenseite des Trägers 5 und der Vorrichtung 2.

Der erste Hebel 14 ist auf der ersten Trägerseite 15 um die erste feststehende Schwenkachse 12.1 gemäß Pfeil P1 schwenkbar und als ein erster Schwenkhebel 14.1 zum Ausfahren und Einfahren der Sensoreinheit 6 relativ zum Träger 5 ausgebildet. Der erste Schwenkhebel 14.1 ist beispielsweise ein Profilelement, zum Beispiel als ein L-förmiger Hebelarm, ausgebildet. Die gestrichelte Linie zwischen der ersten feststehenden Schwenkachse 12.1 und der ersten bewegbaren Schwenkachse 13.2 stellt einen geraden virtuellen Schwenkarm (gestrichelt dargestellt) für den ersten Schwenkhebel 14.1 dar.

Dabei kann der Hebelmechanismus 9 ein Paar von ersten Schwenkhebeln 14.1 aufweisen, die jeweils an einem ersten Ende an gegenüberliegenden Seiten an dem Sensorelement 6 angelenkt sind, wie dies in **Figuren 3 bis 5** gezeigt ist.

Das Paar von ersten Schwenkhebeln 14.1 kann als ein einzelnes Profilelement, insbesondere ein Formbauteil, zum Beispiel u-förmiges Profil, mit frei abstehenden Armen als erste Schwenkhebel 14.1 ausgebildet sein. Die ersten Schwenkhebel 14.1 bilden einen Abschnitt des als ein einstückiges Formbauteil ausgebildeten Hebels 11. Alternativ können die ersten Schwenkhebel 14.1 als separate Hebelarme ausgebildet sein.

Der zweite Hebel 16 ist auf der zweiten Trägerseite 17 um die zweite feststehende Schwenkachse 12.2 gemäß Pfeil P1 schwenkbar und als ein zweiter Schwenkhebel 16.1 sowohl zum Ausfahren und Einfahren der Sensoreinheit 6 relativ zum Träger 5 gemäß Pfeil P3 als auch zum Aufschwenken oder Zuschwenken des Schutzelements 7 und des Zierelements 8 gemäß Pfeil P4 ausgebildet. Die gestrichelte Linie zwischen der zweiten feststehenden Schwenkachse 12.2 und der zweiten bewegbaren Schwenkachse 13.3 stellt einen geraden virtuellen Schwenkarm (in Figur 2 gestrichelt dargestellt) für den zweiten Schwenkhebel 16.1 dar.

Der zweite Schwenkhebel 16.1 ist beispielsweise ein Profilelement, zum Beispiel als ein I-förmiger oder L-förmiger Hebelarm, ausgebildet. Dabei kann der Hebelmechanismus 9 ein Paar von zweiten Schwenkhebeln 16.1 aufweisen, die jeweils an gegenüberliegenden Seiten an dem Sensorelement 6 und an gegenüberliegenden Seiten der zugehörigen feststehenden Lagerstelle 12.2 angelenkt sind, wie dies in **Figuren 3 bis 5** gezeigt ist. Das Paar von zweiten Schwenkhebeln 16.1 kann als ein einzelnes Profilelement, insbesondere ein einstückiges Formbauteil, mit frei abstehenden Armen als zweite Schwenkhebel 16.1 ausgebildet sein. Alternativ können die zweiten Schwenkhebel 16.1 als separate Hebelarme ausgebildet sein.

Der zweite Hebel 16 ist auf der zweiten Trägerseite 17 um die zweite feststehende Schwenkachse 12.2 schwenkbar, die den gemeinsamen zweiten feststehenden Drehpunkt 10.2 des Schutzelements 7 und des Zierelements 8 bildet. Das Schutzelement 7 und das Zierelement 8 können direkt an der zweiten feststehenden Schwenkachse 12.2 angelenkt sein. Alternativ können diese über den zweiten Hebel 16 an der zweiten feststehenden Schwenkachse 12.2 angelenkt sein. Der zweite Hebel 16 bildet dabei einen zweiten Schwenkhebel 16.1 sowohl für das Schutzelement 7 als auch das Zierelement 8. Darüber hinaus bildet der zweite Hebel 16 einen zweiten Schwenkhebel 16.1 für eine Einfahrbewegung und Ausfahrbewegung des Sensorelements 6. Der zweite Hebel 16 weist beispielsweise eine L-Form auf.

Dabei kann der Hebelmechanismus 9 ein Paar von zweiten Hebeln 16 aufweisen, die jeweils an gegenüberliegenden Seiten an dem Sensorelement 6 angelenkt sind.

Die feststehenden Schwenkachsen 12, 12.1, 12.2 verlaufen senkrecht zu den ersten Hebeln 14 und den zweiten Hebeln 16. Die feststehenden Schwenkachsen 12, 12.1, 12.2 sind voneinander beabstandet und beispielsweise durch ein Grundelement 18 des Trägers 5 voneinander getrennt. Dabei ist eine der feststehenden Schwenkachsen 12, insbesondere die erste feststehende Schwenkachse 12.1 auf der ersten Trägerseite 15, zum Beispiel eine Innenseite der Vorrichtung 2, angeordnet. Die andere feststehende Schwenkachse 12, insbesondere die zweite feststehende Schwenkachse 12.2, ist auf der zur ersten Trägerseite 15 gegenüberliegenden zweiten Trägerseite 17 des Trägers 5 angeordnet. Die zweite Trägerseite 17 bildet eine Außenseite der Vorrichtung 2.

Darüber hinaus sind das Schutzelement 7 und das Zierelement 8 in der Schließstellung III zueinander beabstandet und insbesondere parallel zueinander angeordnet. Beispielsweise ist zwischen dem Schutzelement 7 und dem Zierelement 8 ein Dämpfungselement 20, zum Beispiel ein Gummiring oder ein Gummipuffer, angeordnet. Das Dämpfungselement 20 kann gleichzeitig ein Dichtungselement bilden. Dies ermöglicht eine besonders geräuscharme Vorrichtung 2, welche gleichzeitig vor einer Verschmutzung geschützt ist. Insbesondere werden das Schutzelement 7 und das Zierelement 8 in der Schließstellung III mittels des Hebelmechanismus 9 gegen das Dämpfungselement 20 gezogen.

**Figur 3** zeigt die Vorrichtung 2 in perspektivischer Darstellung in Draufsicht auf die erste Trägerseite 15.

Der feststehende Träger 5 weist eine Trägeröffnung 19 (in **Figur 3** dargestellt) auf, durch welche die Sensoreinheit 6 zwischen ihrer Ruheposition I und ihrer Betriebsposition II bewegbar ist. Zusätzlich kann ein weiteres Dämpfungselement 20 zwischen dem Schutzelement 7 und dem Träger 15 angeordnet sein. Dieses Dämpfungselement 20 kann vorteilhafterweise die Trägeröffnung 19 vollständig umgeben.

Ferner kann der Hebelmechanismus 9 mit einer von einem Elektromotor 21 drehend antreibbaren Welle gekoppelt sein, mit der einer der Hebel 11, zum Beispiel der erste Hebel 14 oder das Paar erster Hebel 14, drehfest verbunden ist. Hierdurch ist die Vorrichtung 2 motorisch verstellbar ausgebildet.

Im Bereich der ersten feststehenden Schwenkachse 12.1 ist eine erste Lagerwelle 22 angeordnet, an welcher die ersten Schwenkhebel 14.1 rotatorisch angelenkt sind.

Im Bereich der ersten bewegbaren Schwenkachse 13.2 ist eine zweite Lagerwelle 23 angeordnet, an welcher die ersten Schwenkhebel 14.1 und das Sensorelement 6 mittels Befestigungslaschen 24 rotatorisch angelenkt sind (dargestellt in Figur 3).

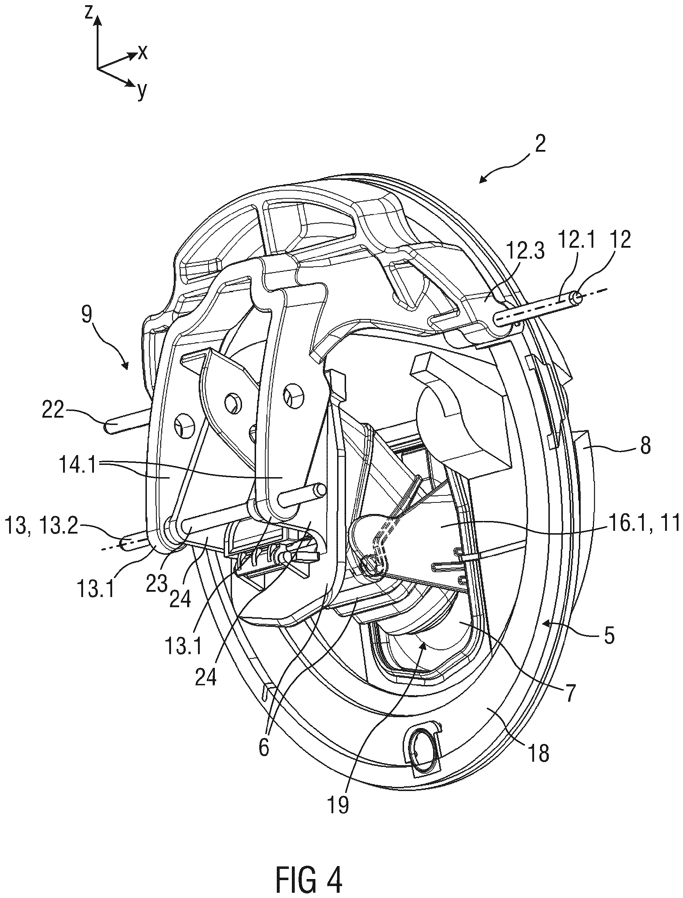

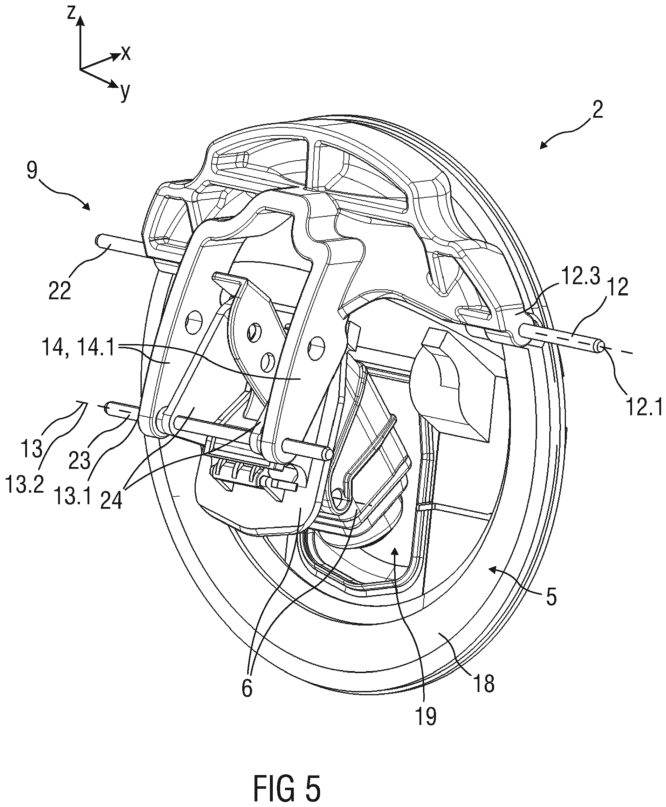

**Figuren 4** **und** **5** zeigen die Vorrichtung 2 in weiteren perspektivischen Darstellungen in Draufsicht auf die erste Trägerseite 15 zur Verdeutlichung der Anlenkungspunkte im Bereich der ersten feststehenden Schwenkachse 12.1 und der ersten bewegbaren Schwenkachse 13.2, wobei die Vorrichtung 2 in geschlossener Position gezeigt ist.

In **Figur 5** sind der zweite Hebel 16 und das Schutzelement 7 sowie das Zierelement 8 zur besseren Übersichtlichkeit nicht dargestellt.

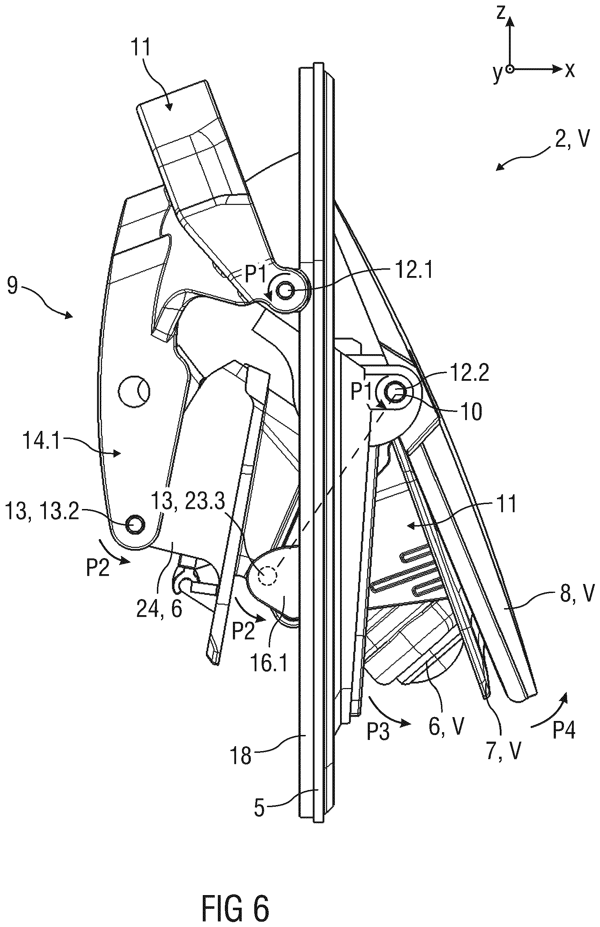

**Figur 6** zeigt schematisch in Seitenansicht die erste Trägerseite 15 der erfindungsgemäßen Vorrichtung 2 in teilausgefahrener Position V.

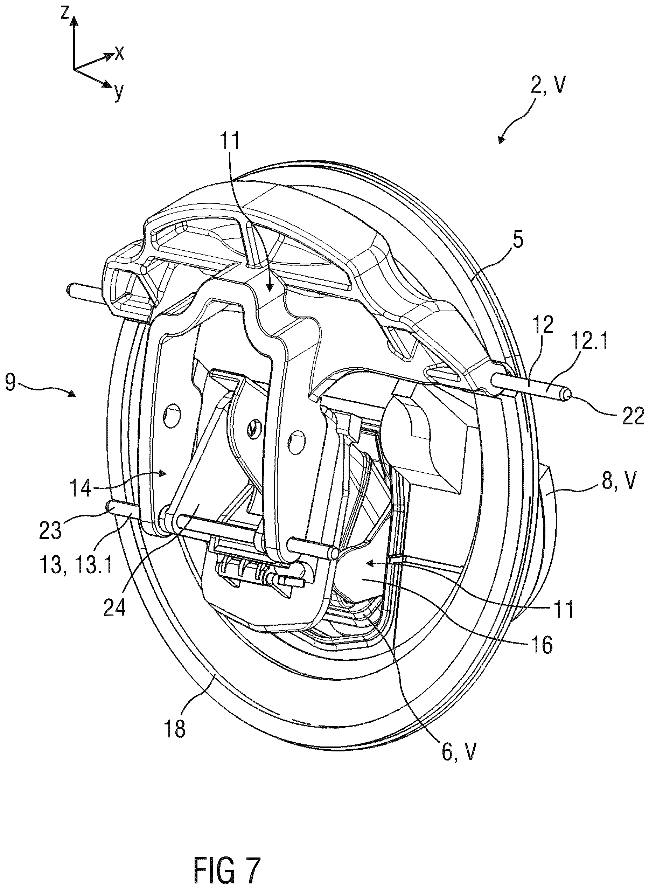

**Figur 7** zeigt schematisch in perspektivischer Darstellung die Vorrichtung 2 gemäß **Figur 6** in der teilausgefahrenen Position V.

**Figur 8** zeigt schematisch in Seitenansicht die erste Trägerseite 15 der erfindungsgemäßen Vorrichtung 2 in vollständig ausgefahrener Position VI.

In der vollständig ausgefahrenen Betriebsposition II der Sensoreinheit 6 ist diese durch die Trägeröffnung 19 hindurch ausgefahren und von außen zugänglich und kann somit die Fahrzeugumgebung erfassen.

**Figur 9** zeigt schematisch in perspektivischer Darstellung die Vorrichtung 2 gemäß **Figur 5** in der vollständig ausgefahrenen Position VI.

### BEZUGSZEICHENLISTE

- 1: Fahrzeug
- 2: Vorrichtung
- 3: Motorhaube
- 4: Heckdeckel
- 5: Träger
- 6: Sensoreinheit
- 7: Schutzelement
- 8: Zierelement
- 9: Hebelmechanismus
- 10.1: erster feststehender Drehpunkt
- 10.2: zweiter feststehender Drehpunkt
- 11: Hebel
- 12: feststehende Schwenkachse
- 12.1: erste feststehende Schwenkachse
- 12.2: zweite feststehende Schwenkachse
- 12.3: feststehende Lagerstelle
- 13: bewegbare Schwenkachse
- 13.1: bewegbare Lagerstelle
- 13.2: erste bewegbare Schwenkachse
- 13.3: zweite bewegbare Schwenkachse
- 14: erster Hebel
- 14.1: erster Schwenkhebel
- 15: erste Trägerseite
- 16: zweiter Hebel
- 16.1: zweiter Schwenkhebel
- 17: zweite Trägerseite
- 18: Grundelement
- 19: Trägeröffnung
- 20: Dämpfungselement
- 21: Elektromotor
- 22: erste Lagerwelle
- 23: zweite Lagerwelle
- 24: Befestigungslasche

- I: Ruheposition
- II: Betriebsposition
- III: Schließstellung
- IV: Offenstellung
- V: teilausgefahrene Position
- VI: vollständig ausgefahrene Position

- X: Längsrichtung
- Y: Querrichtung
- Z: Vertikalrichtung

## Patentansprüche

1. Vorrichtung (2) für ein Fahrzeug (1), insbesondere ein Kraftfahrzeug, umfassend zumindest:
- einen feststehenden Träger (5),
- eine Sensoreinheit (6), die zwischen einer Ruheposition (I) und einer Betriebsposition (II) bewegbar ist,
- ein Schutzelement (7) für die Sensoreinheit (6) und ein Zierelement (8), welche jeweils zwischen einer Schließstellung (III) und einer Offenstellung (IV) bewegbar sind,
wobei das Schutzelement (7) und das Zierelement (8) in der jeweiligen Schließstellung (III) übereinander angeordnet sind und die Sensoreinheit (6) in ihrer Ruheposition (I) abdecken,
wobei in der Offenstellung (IV) von Schutzelement (7) und Zierelement (8) die Sensoreinheit (6) in ihre Betriebsposition (II) gestellt ist,
wobei die Sensoreinheit (6), das Schutzelement (7) und das Zierelement (8) mittels eines Hebelmechanismus (9) miteinander bewegungsgekoppelt sind und das Schutzelement (7) und das Zierelement (8) rotatorisch und koaxial zueinander an dem Träger (5) um einen gemeinsamen Drehpunkt (10.2) schwenkbar gelagert sind und die Sensoreinheit (6) an dem Hebelmechanismus (9) angelenkt ist.

2. Vorrichtung (2) für ein Fahrzeug (1), insbesondere ein Kraftfahrzeug, umfassend zumindest:
- einen feststehenden Träger (5) mit einer Trägeröffnung (19),
- eine Sensoreinheit (6), die zwischen einer Ruheposition (I) und einer Betriebsposition (II) durch die Trägeröffnung (19) bewegbar ist,
- ein Schutzelement (7) für die Sensoreinheit (6) und ein Zierelement (8), welche jeweils zwischen einer Schließstellung (III) und einer Offenstellung (IV) bewegbar sind,
wobei das Schutzelement (7) und das Zierelement (8) in der jeweiligen Schließstellung (III) übereinander angeordnet sind und die Sensoreinheit (6) in ihrer Ruheposition (I) abdecken,
wobei in der Offenstellung (IV) von Schutzelement (7) und Zierelement (8) die Sensoreinheit (6) in ihre Betriebsposition (II) gestellt ist,
wobei die Sensoreinheit (6), das Schutzelement (7) und das Zierelement (8) mittels eines Hebelmechanismus (9) miteinander bewegungsgekoppelt und das Schutzelement (7) und das Zierelement (8) und der Hebelmechanismus (9) rotatorisch und koaxial an dem Träger (5) um einen gemeinsamen Drehpunkt (10.2) schwenkbar gelagert sind und die Sensoreinheit (6) an dem Hebelmechanismus (9) angelenkt ist.

3. Vorrichtung nach Anspruch 1 oder 2, wobei der Träger (5) an einer Rückseite eine erste feststehende Schwenkachse (12.1), die einen ersten feststehenden Drehpunkt (10.1) für den Hebelmechanismus (9) bildet, und an einer Vorderseite eine zweite feststehende Schwenkachse (12.2) aufweist, die einen zweiten feststehenden Drehpunkt (10.2) sowohl für den Hebelmechanismus (9) als auch für das Schutzelement (7) und das Zierelement (8) bildet

4. Vorrichtung (2) nach Anspruch 3,
wobei das Schutzelement (7) und das Zierelement (8) über den zweiten feststehenden Drehpunkt (10.2) an dem Träger (5) angelenkt sind und synchron zwischen Schließstellung (III) und Offenstellung (IV) bewegbar sind.

5. Vorrichtung (2) nach einem der vorhergehenden Ansprüche,
wobei der Hebelmechanismus (9) einen ersten Hebel (14), der auf einer ersten Trägerseite (15) angelenkt ist, und einen zweiten Hebel (16) umfasst, der auf einer zweiten Trägerseite (17) angelenkt ist.

6. Vorrichtung (2) nach Anspruch 5,
wobei der erste Hebel (14) auf der ersten Trägerseite (15) um die erste feststehende Schwenkachse (12.1) schwenkbar ist und als ein erster Schwenkhebel (14.1) sowohl zum Einfahren als auch zum Ausfahren der Sensoreinheit (6) ausgebildet ist.

7. Vorrichtung (2) nach Anspruch 6,
wobei der erste Schwenkhebel (14.1) an dem feststehenden Träger (5) um die erste feststehende Schwenkachse (12.1) schwenkbar und an dem Sensorelement (6) um eine erste bewegbare Schwenkachse (13.2) angelenkt ist.

8. Vorrichtung (2) nach einem der Ansprüche 5 bis 7,
wobei der zweite Hebel (16) auf der zweiten Trägerseite (17) um die zweite feststehende Schwenkachse (12.2) schwenkbar ist und als ein zweiter Schwenkhebel (16.1) sowohl zum Einfahren als auch zum Ausfahren der Sensoreinheit (6) ausgebildet ist.

9. Vorrichtung (2) nach Anspruch 8,
wobei der zweite Schwenkhebel (16.1) an dem feststehenden Träger (5) um die zweite feststehende Schwenkachse (12.2) schwenkbar und an dem Sensorelement (6) um eine zweite bewegbare Schwenkachse (13.3) angelenkt ist.

10. Vorrichtung (2) nach einem der Ansprüche 7 bis 9,
wobei die erste bewegbare Schwenkachse (13.2) und die zweite bewegbare Schwenkachse (13.3) gleichzeitig auch das Sensorelement (6) lagernde Lagerachsen sind.

11. Vorrichtung (2) nach einem der vorhergehenden Ansprüche, wobei das Schutzelement (7) und das Zierelement (8) in der Schließstellung (III) zueinander beabstandet sind.

12. Vorrichtung (2) nach einem der vorhergehenden Ansprüche, wobei der Hebelmechanismus (9) mit einer von einem Elektromotor (21) drehend antreibbaren Welle gekoppelt ist, mit der einer der Hebel (11) drehfest verbunden ist.

13. Vorrichtung (2) nach einem der vorhergehenden Ansprüche, wobei das Zierelement (8) als Emblem ausgebildet ist.

14. Vorrichtung (2) nach einem der vorhergehenden Ansprüche, wobei die Sensoreinheit (6) ein Umfeldsensor ist.

15. Fahrzeug (1) mit einer Vorrichtung (2) nach einem der vorhergehenden Ansprüche.

## Claims

1. Device (2) for a vehicle (1), in particular a motor vehicle, comprising at least:
- a fixed carrier (5),
- a sensor unit (6), which is movable between a rest position (I) and an operating position (II),
- a protective element (7) for the sensor unit (6) and a decorative element (8), which are each movable between a closed position (III) and an open position (IV),
wherein, in the respective closed position (III), the protective element (7) and the decorative element (8) are arranged one over the other and cover the sensor unit (6) in its rest position (I), wherein, in the open position (IV) of protective element (7) and decorative element (8), the sensor unit (6) is positioned into its operating position (II),
wherein the sensor unit (6), the protective element (7) and the decorative element (8) are coupled in terms of movement to one another by means of a lever mechanism (9), and the protective element (7) and the decorative element (8) are mounted in a rotatable and mutually coaxial manner on the carrier (5) so as to be pivotable about a common centre of rotation (10.2), and the sensor unit (6) is articulated on the lever mechanism (9).

2. Device (2) for a vehicle (1), in particular a motor vehicle, comprising at least:
- a fixed carrier (5) with a carrier opening (19),
- a sensor unit (6), which is movable through the carrier opening (19) between a rest position (I) and an operating position (II),
- a protective element (7) for the sensor unit (6) and a decorative element (8), which are each movable between a closed position (III) and an open position (IV),
wherein, in the respective closed position (III), the protective element (7) and the decorative element (8) are arranged one over the other and cover the sensor unit (6) in its rest position (I), wherein, in the open position (IV) of protective element (7) and decorative element (8), the sensor unit (6) is positioned into its operating position (II),
wherein the sensor unit (6), the protective element (7) and the decorative element (8) are coupled in terms of movement to one another by means of a lever mechanism (9), and the protective element (7) and the decorative element (8) and the lever mechanism (9) are mounted in a rotatable and coaxial manner on the carrier (5) so as to be pivotable about a common centre of rotation (10.2), and the sensor unit (6) is articulated on the lever mechanism (9).

3. Device according to Claim 1 or 2,
wherein the carrier (5), on a rear side, has a first fixed pivot pin (12.1), which forms a first fixed centre of rotation (10.1) for the lever mechanism (9), and, on a front side, has a second fixed pivot pin (12.2), which forms a second fixed centre of rotation (10.2) both for the lever mechanism (9) and for the protective element (7) and decorative element (8).

4. Device (2) according to Claim 3,
wherein the protective element (7) and the decorative element (8) are articulated on the carrier (5), and are movable in a synchronous manner between closed position (III) and open position (IV), via the second fixed centre of rotation (10.2).

5. Device (2) according to one of the preceding claims, wherein the lever mechanism (9) comprises a first lever (14), which is articulated on a first carrier side (15), and a second lever (16), which is articulated on a second carrier side (17).

6. Device (2) according to Claim 5,
wherein the first lever (14) is pivotable on the first carrier side (15) around the first fixed pivot pin (12.1) and is configured, as a first pivot lever (14.1), both for retracting and for extending the sensor unit (6).

7. Device (2) according to Claim 6,
wherein the first pivot lever (14.1) is pivotable on the fixed carrier (5) around the first fixed pivot pin (12.1) and is articulated on the sensor element (6) around a first movable pivot pin (13.2).

8. Device (2) according to one of Claims 5 to 7, wherein the second lever (16) is pivotable on the second carrier side (17) around the second fixed pivot pin (12.2) and is configured, as a second pivot lever (16.1), both for retracting and for extending the sensor unit (6).

9. Device (2) according to Claim 8,
wherein the second pivot lever (16.1) is pivotable on the fixed carrier (5) around the second fixed pivot pin (12.2) and is articulated on the sensor element (6) around a second movable pivot pin (13.3).

10. Device (2) according to one of Claims 7 to 9, wherein the first movable pivot pin (13.2) and the second movable pivot pin (13.3) are simultaneously also bearing pins by which the sensor element (6) is mounted.

11. Device (2) according to one of the preceding claims, wherein the protective element (7) and the decorative element (8) are spaced apart from one another in the closed position (III).

12. Device (2) according to one of the preceding claims, wherein the lever mechanism (9) is coupled to a shaft which is able to be driven in rotation by an electric motor (21) and to which one of the levers (11) is connected in a rotationally conjoint manner.

13. Device (2) according to one of the preceding claims, wherein the decorative element (8) is in the form of an emblem.

14. Device (2) according to one of the preceding claims, wherein the sensor unit (6) is a surroundings sensor.

15. Vehicle (1) having a device (2) according to one of the preceding claims.

## Revendications

1. Dispositif (2) pour un véhicule (1), en particulier un véhicule automobile, comprenant au moins :
- un support fixe (5),
- une unité de capteur (6), qui est déplaçable entre une position de repos (I) et une position de fonctionnement (II),
- un élément protecteur (7) pour l'unité de capteur (6) et un élément décoratif (8), lesquels sont déplaçables respectivement entre une position fermée (III) et une position ouverte (IV),
l'élément protecteur (7) et l'élément décoratif (8) étant disposés l'un au-dessus de l'autre dans la position fermée (III) respective et recouvrant l'unité de capteur (6) dans sa position de repos (I), l'unité de capteur (6) étant placée dans sa position de fonctionnement (II) dans la position ouverte (IV) de l'élément protecteur (7) et de l'élément décoratif (8),
l'unité de capteur (6), l'élément protecteur (7) et l'élément décoratif (8) étant couplés en déplacement les uns aux autres à l'aide d'un mécanisme à leviers (9) et l'élément protecteur (7) et l'élément décoratif (8) étant montés à rotation et pivotants autour d'un centre de rotation (10.2) commun de manière coaxiale l'un par rapport à l'autre sur le support (5) et l'unité de capteur (6) étant articulée sur le mécanisme à leviers (9).

2. Dispositif (2) pour un véhicule (1), en particulier un véhicule automobile, comprenant au moins :
- un support fixe (5) comportant une ouverture de support (19),
- une unité de capteur (6), qui est déplaçable entre une position de repos (I) et une position de fonctionnement (II) à travers l'ouverture de support (19),
- un élément protecteur (7) pour l'unité de capteur (6) et un élément décoratif (8), lesquels sont déplaçables respectivement entre une position fermée (III) et une position ouverte (IV),
l'élément protecteur (7) et l'élément décoratif (8) étant disposés l'un au-dessus de l'autre dans la position fermée (III) respective et recouvrant l'unité de capteur (6) dans sa position de repos (I), l'unité de capteur (6) étant placée dans sa position de fonctionnement (II) dans la position ouverte (IV) de l'élément protecteur (7) et de l'élément décoratif (8),
l'unité de capteur (6), l'élément protecteur (7) et l'élément décoratif (8) étant couplés en déplacement les uns aux autres à l'aide d'un mécanisme à leviers (9) et l'élément protecteur (7) et l'élément décoratif (8) et le mécanisme à leviers (9) étant montés à rotation et pivotants autour d'un centre de rotation (10.2) commun de manière coaxiale sur le support (5) et l'unité de capteur (6) étant articulée sur le mécanisme à leviers (9).

3. Dispositif selon la revendication 1 ou 2, le support (5) présentant, sur un côté arrière, un premier axe de pivotement fixe (12.1), qui forme un premier centre de rotation fixe (10.1) pour le mécanisme à leviers (9), et, sur un côté avant, un deuxième axe de pivotement fixe (12.2), qui forme un deuxième centre de rotation fixe (10.2) tant pour le mécanisme à leviers (9) que pour l'élément protecteur (7) et l'élément décoratif (8).

4. Dispositif (2) selon la revendication 3,
l'élément protecteur (7) et l'élément décoratif (8) étant articulés sur le support (5) par le biais du deuxième centre de rotation fixe (10.2) et étant déplaçables de manière synchrone entre la position fermée (III) et la position ouverte (IV).

5. Dispositif (2) selon l'une des revendications précédentes,
le mécanisme à leviers (9) comprenant un premier levier (14), qui est articulé sur un premier côté de support (15), et un deuxième levier (16), qui est articulé sur un deuxième côté de support (17).

6. Dispositif (2) selon la revendication 5,
le premier levier (14) étant pivotant sur le premier côté de support (15) autour du premier axe de pivotement fixe (12.1) et étant réalisé sous la forme d'un premier levier de pivotement (14.1) tant pour la rentrée que pour la sortie de l'unité de capteur (6) .

7. Dispositif (2) selon la revendication 6,
le premier levier pivotant (14.1) étant pivotant sur le support fixe (5) autour du premier axe de pivotement fixe (12.1) et étant articulé sur l'élément capteur (6) autour d'un premier axe de pivotement déplaçable (13.2).

8. Dispositif (2) selon l'une des revendications 5 à 7, le deuxième levier (16) étant pivotant sur le deuxième côté de support (17) autour du deuxième axe de pivotement fixe (12.2) et étant réalisé sous la forme d'un deuxième levier de pivotement (16.1) tant pour la rentrée que pour la sortie de l'unité de capteur (6).

9. Dispositif (2) selon la revendication 8,
le deuxième levier pivotant (16.1) étant pivotant sur le support fixe (5) autour du deuxième axe de pivotement fixe (12.2) et étant articulé sur l'élément capteur (6) autour d'un deuxième axe de pivotement déplaçable (13.3).

10. Dispositif (2) selon l'une des revendications 7 à 9, le premier axe de pivotement déplaçable (13.2) et le deuxième axe de pivotement déplaçable (13.3) étant en même temps également des axes de support supportant l'élément capteur (6).

11. Dispositif (2) selon l'une des revendications précédentes, l'élément protecteur (7) et l'élément décoratif (8) étant espacés l'un de l'autre dans la position fermée (III).

12. Dispositif (2) selon l'une des revendications précédentes, le mécanisme à leviers (9) étant accouplé à un arbre pouvant être entraîné en rotation par un moteur électrique (21), arbre auquel l'un des leviers (11) est relié de manière solidaire en rotation.

13. Dispositif (2) selon l'une des revendications précédentes, l'élément décoratif (8) étant réalisé sous forme d'emblème.

14. Dispositif (2) selon l'une des revendications précédentes, l'unité de capteur (6) étant un capteur d'environnement.

15. Véhicule (1) comportant un dispositif (2) selon l'une des revendications précédentes.
